# EUROPEAN PATENT SPECIFICATION

(11) **EP 2 703 718 B1**
(45) Date of publication and mention of the grant of the patent: **10.02.2016**
(21) Application number: 12190795.0
(22) Date of filing: 31.10.2012
(51) Int. Cl.: F23L 15/04, F23L 7/00, F23J 15/06, F23J 15/00, F25J 3/04

(54) **Method of operating an oxy-fuel boiler system**
Verfahren zum Betreiben eines Sauerstoff-Brennstoff-Kesselsystems.
Mode opératoire pour une chaudière à oxy-carburant

(30) Priority: 03.09.2012 EP 12182733
(43) Date of publication of application: 05.03.2014
(73) Proprietor: ALSTOM Technology Ltd, 5400 Baden (CH)
(72) Inventor: Weitzel, Markus, 55218 Ingelheim (DE)
(74) Representative: General Electric Technology GmbH

(56) References cited:
- WO-A1-94/01724
- FR-A1- 2 891 609
- GB-A- 1 298 434
- US-A1- 2003 097 840
- US-B1- 6 196 000

## Description

### Technical field

This disclosure is related to a method of operating a boiler system according to the preamble of claim 1.

### Background

In the combustion of a fuel, such as coal, oil, peat, waste, etc., in a combustion plant, such as a power plant, a hot process gas is generated, such process gas containing, among other components, carbon dioxide CO₂. With increasing environmental demands various processes for removing carbon dioxide from the process gas have been developed. One such process is the so called oxy-fuel process. In an oxy-fuel process a fuel, such as one of the fuels mentioned above, is combusted in the presence of a nitrogen-lean gas. Oxygen gas, which is provided by an air separation unit, is supplied to a boiler in which the oxygen gas oxidizes the fuel. In the oxy-fuel combustion process a carbon dioxide rich flue gas is produced, which can be treated using various CO₂ capture technologies in order to reduce the emission of carbon dioxide into the atmosphere. Oxygen may be provided by an oxygen production unit known as an air separation unit (ASU), which extracts oxygen out of the surrounding air. There are various technologies that are used for this separation process, but the most common is via cryogenic distillation. To achieve the low distillation temperatures (the cooling of the gases) in an ASU a large amount of energy is required to make this refrigeration cycle work and may delivered by an air compressor.

Further, CO₂ capture often comprises cooling, or compression and cooling, of the flue gas to separate CO₂ in liquid or solid form from non-condensable flue gas components, such as N₂ and O₂.

After purification and separation of carbon dioxide, a carbon dioxide rich stream is obtained and need to be handled, such as by storing and transportation in tanks (stationary or on a truck or ship), transporting via pipelines and/or pumping into the ground for prolonged (definitive) storage and mineralisation.

Different components used in an oxy-fuel process may not always be used to their full capacity. Components downstream of the boiler are designed in view of the output from the boiler. Some of the apparatuses used in an oxy-fuel process are thus oversized, or occasionally oversized, since the oxy-fuel process not always is operated at full capacity all the time. One such apparatus may be the compressors in the gas processing unit (GPU) acting on the concentrated carbon dioxide stream.

GB 1 298 434 discloses a method according to the pre-characterizing part of claim 1.

There is always a need to improve the flexibility of an oxy-fuel process. It would be desirable to find new ways to lower overall energy consumption, scale down the size/capacity of the components and better utilize the components present in an oxy-fuel process.

### Summary

By using heat energy from parts of a process and forward it to other parts where it is needed the overall energy consumption may be lowered. By, during periods of low load, recirculating a carbon dioxide rich stream from the discharge of a CO₂ compression unit to the inlet of the CO₂ compression unit the CO₂ compression unit is continuously running steady. The recirculated carbon dioxide rich stream is passed through an air separation unit where it is acting as a refrigerant by transferring heat energy from streams within the air separation unit to the carbon dioxide rich stream which then is evaporated. Thus, this presents an opportunity to decrease the supply of external heat energy from outside the oxyfuel process, i.e. by using heat energy available in the process the required energy input may be decreased.

The load dependent heat transfer svstem results in a decreased overall energy consumption, and decreased operational costs for the process.

An object of the present invention is to provide a method according to claim 1.

According to one embodiment, the recirculation mode of the boiler system is controlled using a controlling device and a regulating device.

According to one embodiment, the regulating device is also responsible for expanding the carbon dioxide stream from the CO₂ compression unit before entry into the air separation unit as the stream.

According to one embodiment, the carbon dioxide stream from the CO₂ compression unit is a part of the pressurized carbon dioxide stream exiting the gas processing unit or is taken from the CO₂ compression unit before the pressurized carbon dioxide stream is exiting the gas processing unit.

### Brief Description of the Drawings

Referring now to the figures, which are exemplary embodiments, and wherein the like elements are numbered alike:
Fig. 1 is a schematic view of a boiler system 27 in an oxy-fuel process, disclosing a recirculation system 26.
Fig. 2 is a schematic view of a boiler system 27 in an oxy-fuel process, disclosing another recirculation system 26.

### Detailed description

The present method establishes the load at which the boiler system operates. By providing limit values on the load for when the recirculation mode is to be active the method is switching between an inactive and active mode based on a load value measured in the process during operation. The load value is the set point of the power plant capacity. By directly or indirectly measuring e.g. the amount of ingoing fuel into the boiler, power consumption of the fuel pump, oxygen demand (e.g. weight or volume flow of oxygen forwarded to the boiler), load on the CO₂ compression unit, electrical power output, demand from the grid, flue gas flow rate, flue gas volumetric flow rate, steam production and/or temperatures of the process, the capacity of the boiler system is established. The recirculation mode is to be active during a low load on the boiler system. The load on the boiler system is considered low when the load is at most or below 75% of maximum capacity of the boiler and/or CO₂ compression unit, preferably 30-75%.

The load on the boiler system could be measured and controlled using the oxygen demand or flow rate to the boiler. The load on the CO₂ compression unit could be measured and controlled using the operating point of the CO₂ compression unit. The load of big centrifugal compressors is measured typically by flow control. Below a 75% load such machines are operated using recirculation to prevent damages to the equipment from surge conditions. A predetermined set point of a compressor, depending e.g. on the compressor's manufacturer and model, is generally in the range of 75% to 80% of the compressor's capacity. For certain compressor types, e.g. screw compressors or reciprocating ones, the range could be extended to 30 to 75%.

The limit values of the boiler system to operate in the recirculation mode are set as a first and a second load. The limit value for a first load may be set to at least 75% of maximum capacity of the boiler or CO₂ compression unit, at which the boiler system deactivates the recirculation mode. The limit value for a second load may be set to below 75% of maximum capacity of the boiler or CO₂ compression unit, at which the boiler system activates and operates in the recirculation mode.

The mode of operation of the boiler system is controlled by a controlling device, such as a computer, microprocessor or controller, which compares the value of a measured current load with the set limit values and then regulate the process accordingly.

The carbon dioxide rich streams of the gas processing unit (GPU) are controlled, e.g. in terms of temperature and/or flow. The liquid, gaseous and supercritical carbon dioxide streams in the boiler system are forwarded by controlling the flow of carbon dioxide in a per se known manner.

By the term "carbon dioxide rich" used throughout the application text is meant that the gas stream referred to contains at least 40 % by volume of carbon dioxide (CO₂).

The CO₂ compression unit comprises at least one compressor having at least one, and typically two to ten compression stages for compressing the carbon dioxide gas from a preceding CO₂ separation unit. Each compression stage could be arranged as a separate unit. As an alternative, several compression stages could be operated by a common drive shaft. The CO₂ compression unit may be run under subcritical conditions or supercritical conditions. Further, the CO₂ compression unit may also comprise intercoolers and aftercoolers. Also, separators may be included to separate liquid phase from gaseous phase. The carbon dioxide rich stream to be recirculated may be taken from the CO₂ compression unit upon exit from the CO₂ compression unit or streams within the CO₂ compression unit. If the carbon dioxide rich stream to be recirculated is taken from within the CO₂ compression unit it may be taken after the compressors included in the CO₂ compression unit and after an at least one cooling unit before forwarding the carbon dioxide stream out of the CO₂ compression unit, or after the compressors included in the CO₂ compression unit and before an at least one carbon dioxide pump, forwarding the carbon dioxide stream out of the CO₂ compression unit.

Carbon dioxide at or above the critical point (31.1 °C and 7.39 MPa) for carbon dioxide, may adopt properties midway between a gas and a liquid, a supercritical fluid, expanding like a gas but with a density of a liquid. The stream exiting the CO₂ compression unit is a CO₂ product, liquid or supercritical fluid form to be stored, temporarily or permanently, and/or used in other processes.

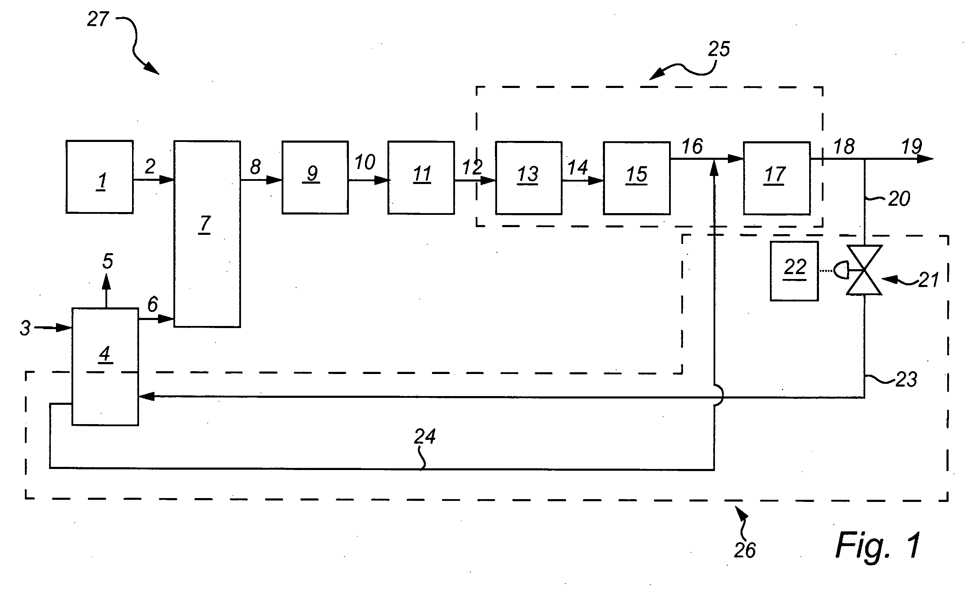

The recirculation and heat transfer process and the system involved will now be disclosed more in detail with reference to Figs. 1-2. It is to be noted that not all streams or controlling means needed to operate an oxy-fuel process are disclosed in the figures. The Figures 1-2 are focusing on the main flow of the CO₂ stream, which is purified, cooled, separated and then compressed but mainly on the CO₂ rich stream around the CO₂ compression unit, which flow is dependent of fluctuations in process load, in order to make the oxy-fuel process more flexible in terms of energy resource allocation and capacity.

Fig. 1 is a schematic representation of a boiler system 27, as seen from the side thereof. The boiler system 27 comprises, as main components, a boiler 7, being in this embodiment an oxy-fuel boiler, and an air quality control system (AQCS) 9. The air quality control system 9 comprises a particulate removal device, which may, for example, be a fabric filter or an electrostatic precipitator, and a sulphur dioxide removal system, which may be a wet scrubber.

A fuel, such as coal, oil, or peat, is contained in a fuel storage 1, and can be supplied to the boiler 7 via a supply stream 2. An air separation unit (ASU) 4 is operative for providing oxygen gas in a manner which is known per se. A stream 3 of air is separated within the air separation unit 4 into an oxygen containing gas stream 6 and a stream 5 comprising nitrogen. The oxygen containing gas stream 6 from the air separation unit 4 is continuously, during operation of the boiler 7, fed into the boiler. The produced oxygen gas to be feed to the boiler 7, comprises typically 90-99.9 vol.% oxygen, O₂. A re-circulation of flue gas (not shown), which contains carbon dioxide, to the boiler 7 is provided in the boiler system 27. The re-circulation of flue gas may be taken from a flue gas stream 8 from the boiler 7, a flue gas stream 10 from the AQCS 9 or a flue gas stream 12 from the flue gas condenser 11. The re-circulation of flue gas and the oxygen gas may become mixed with each other to form a gas mixture containing typically about 20-30 % by volume of oxygen gas, the balance being mainly carbon dioxide and water vapour, upstream of the boiler 7. The boiler 7 is operative for combusting the fuel, which is supplied via the supply stream 2, in the presence of the oxygen gas. The flow of oxygen stream 6 may be controlled by a controlling system which may e.g. comprise computer, micro processor, controller, valves, actuators and/or pumps, which system is not shown in the figures for the purpose of maintaining clarity of the illustration. Controlling the flow of oxygen is done in a per se known manner.

A stream 8 is operative for forwarding carbon dioxide rich flue gas generated in the boiler 7 to the air quality control system 9. By "carbon dioxide rich flue gas" is meant that the flue gas leaving the boiler 7 via the stream 8 will contain at least 40 % by volume of carbon dioxide, CO₂. Often more than 50% by volume of the flue gas leaving the boiler 7 will be carbon dioxide. Typically, the flue gas leaving boiler 7 will contain 50-80 % by volume of carbon dioxide. The balance of the "carbon dioxide rich flue gas" will be about 15-40% by volume of water vapour (H₂O), 2-7 % by volume of oxygen (O₂), since a slight oxygen excess is often preferred in the boiler 7, and totally about 0-10 % by volume of other gases, including mainly nitrogen (N₂) and argon (Ar), since some leakage of air can seldom be completely avoided.

The carbon dioxide rich flue gas generated in the boiler 7 may typically comprise contaminants in the form of, for example, dust particles, hydrochloric acid, HCl, sulphur oxides, SO_{X}, and heavy metals, including mercury, Hg, that should be removed, at least partly, from the carbon dioxide rich flue gas prior to disposing of the carbon dioxide.

The air quality control system 9 removes in different steps most of the dust particles from the carbon dioxide rich flue gas and also sulphur dioxide, SO₂, and other acid gases from the carbon dioxide rich flue gas.

An at least partly cleaned carbon dioxide rich flue gas is forwarded from air quality control system 9 via a stream 10 to a flue gas condenser 11. From the flue gas condenser 11 via a stream 12 the flue gas is forwarded to a gas processing unit (GPU) 25 in the form of a gas compression and purification unit of the boiler system 27. In the GPU 25 the cleaned carbon dioxide rich flue gas is further cleaned and is compressed for disposal or further use.

The cleaned carbon dioxide rich flue gas enters the GPU 25 via the stream 12 and is introduced into the flue gas compression unit 13, optionally comprising intercooling and separation steps.

A stream 12 forwards the compressed gas from the flue gas compression unit 13 to a CO₂ separation unit 15 in which a carbon dioxide rich stream 14 is formed, e.g. nitrogen and oxygen are separated from carbon dioxide.

The CO₂ separation unit 15 may further include a trace substance removal unit (not shown), which removes any trace components still present in the stream, e.g. by adsorption or absorption to remove mercury and other substances.

The CO₂ separation unit 15 may include a drier unit (not shown), e.g. at least one adsorption drier, operative for removing at least a portion of the content of water vapour of the flue gas. An adsorption drier contains an adsorbent or desiccant capable of adsorbing water molecules from a gas stream. The desiccant may, for example, be silica gel, calcium sulfate, calcium chloride, montmorillonite clay, molecular sieves, or another material that is, as such, known for its use as a desiccant. The molecular sieves have a pore size suitable for adsorption of water, e.g. molecular sieves having a pore size in the range of 3 to 5 A.

The CO₂ separation unit 15 of the GPU 25 may optionally comprise a flue gas economizer (not shown) arranged between a trace substance removal unit and a drier unit and configured to recover heat from the flue gas stream leaving the trace substance removal unit using, e.g. boiler feed water.

The CO₂ separation unit 15 may include a CO₂ condenser unit (not shown), in which the gas is cooled in a heat-exchanger, often called a cold-box, to cause liquefaction of the carbon dioxide such that the carbon dioxide can be separated from gases, such as nitrogen, that are not liquefied at the same temperature as carbon dioxide.

Furthermore, the GPU 25 comprises a high pressure CO₂ compression unit 17 arranged downstream of the CO₂ separation unit 15, and comprising one or more compression stages for compressing the carbon dioxide to a suitable pressure for a following sequestration. After compression of the gas in the CO₂ compression unit 17, the compressed carbon dioxide, which may be in a supercritical or subcritical fluid state, may be forwarded, via stream 18 for further use. The CO₂ compression unit 17 comprises at least one compressor having at least one, and typically two to ten compression stages for compressing carbon dioxide to liquid or supercritical fluid. Each compression stage could be arranged as a separate unit. As an alternative, several compression stages could be operated by a common drive shaft. The CO₂ compression unit 17 may be run under subcritical conditions or supercritical conditions.

Compressed carbon dioxide hence leaves the GPU 25 via a stream 18. Compressed carbon dioxide leaving the GPU 25 may be transported away for disposal, which is sometimes referred to as "CO₂ sequestration".

A recirculation system 26 operates at a specific mode. The recirculation system 26 is active during low load on the boiler system 27. During high load on the boiler system 27 the recirculation system 26 is inactive. The recirculation system 26 is used to prevent damages to the equipment of the CO₂ compression unit 17 from surge conditions and transfer heat energy from the ASU 4 to aid the cooling process performed in the ASU 4. The stream 18, comprising pressurized carbon dioxide, leaving the GPU 25 may be divided to partly be used in the recirculation system 26. The stream 18 may be divided into a carbon dioxide stream 19 for further use or disposal and a carbon dioxide stream 20 to be used within the recirculation system 26. The split of stream 18 is dependent upon how much carbon dioxide is needed for recirculation to keep the CO₂ compression unit running smoothly. A regulating device 21, e.g. a valve, is used to control the flow of the recirculation system 26 using a controlling device 22. The controlling device 22 may be a computer, microprocessor or controller, which compares the value of a measured current load with the set limit values and then regulate the process accordingly. The stream 20 comprises carbon dioxide in liquid or supercritical fluid form. Optionally the regulating device 21 may also be used to expand the carbon dioxide in liquid or supercritical fluid form. Following the regulating device 21 a stream 23 comprising carbon dioxide in liquid form or two part form, i.e. both liquid and gaseous form, is forwarded to the ASU 4. Within the ASU 4 the stream 23 is evaporated by heat transfer. Streams related to the separation of air within the ASU 4 are heat exchanged with ingoing carbon dioxide containing stream 23. Stream 23 is acting as a refrigerant within the ASU 4. An evaporated carbon dioxide containing stream 24 is exiting the ASU 4, and may be forwarded back to the GPU 25, e.g. inlet of the CO₂ compression unit 17 or ingoing stream 16 to the CO₂ compression unit 17. The evaporated carbon dioxide containing stream 24 exiting the ASU 4 may also be forwarded back to the inlet of the flue gas condenser 11 or inlet of the flue gas compression unit 13, either directly or via a stream entering one of said units. Because the flue gas compression unit 13 and the flue gas condenser 11 also have turn down ratios the recirculation may have a positive impact on the system. If the CO₂ is recycled before the flue gas compressor it has the advantage this increases the molecular weight which makes the compression a little bit more energy efficient. The heat energy transferred in air separation unit 4 results in a decreased temperature therein, i.e. a decreased temperature of streams included within the ASU 4. The evaporated carbon dioxide rich stream 24 may be forwarded using a pumping device (not shown) in a manner known per se.

The load on the boiler system 27 is not always constant. Thus, during periods of low load, e.g. during night time, the boiler system 27 is not performing at its full potential. The CO₂ compression unit 17 may be designed to be able to handle a full load on the boiler system 27. The operating range of a compressor is limited on the high flow side by the choke region and on the low flow side by the surge region. To avoid surge a flow from the discharge side is recirculated to the suction side of the compressor.

During periods of low load on the CO₂ compression unit, e.g. below 75%, the CO₂ compression unit work partly on recirculation. The recirculated CO₂ from the CO₂ compression unit 17 is used as refrigerant to cool the process in the ASU 4 by transferring heat energy from air separation streams (not shown) within the ASU 4 to the recirculated CO₂. Another way of looking at this is by the recirculation of CO₂ flow a surplus of cold energy is extracted out of the stream 23 by evaporation of the carbon dioxide. The surplus of cold energy may then be used in the ASU 4 to cool the air separation process therein.

The difference in load on the boiler system 27 triggers the use of the recirculation system 26. As an example a measuring unit (not shown) could be connected to the boiler 7 or the CO₂ compression unit 17, measuring the load on the boiler 7 or the CO₂ compression unit 17, respectively. When the load on the boiler 7 or CO₂ compression unit 17 reaches a specified value the recirculation system 26 changes modes from active to passive, or the other way around. When the load is high, e.g. at least a load of above 75% on the boiler 7 or CO₂ compression unit 17, the recirculation system 26 is passive. When the load is lower, e.g. below a load of 75% on the boiler 7 or CO₂ compression unit 26, the recirculation system 26 is activated to facilitate heat exchange with air separation unit 4.

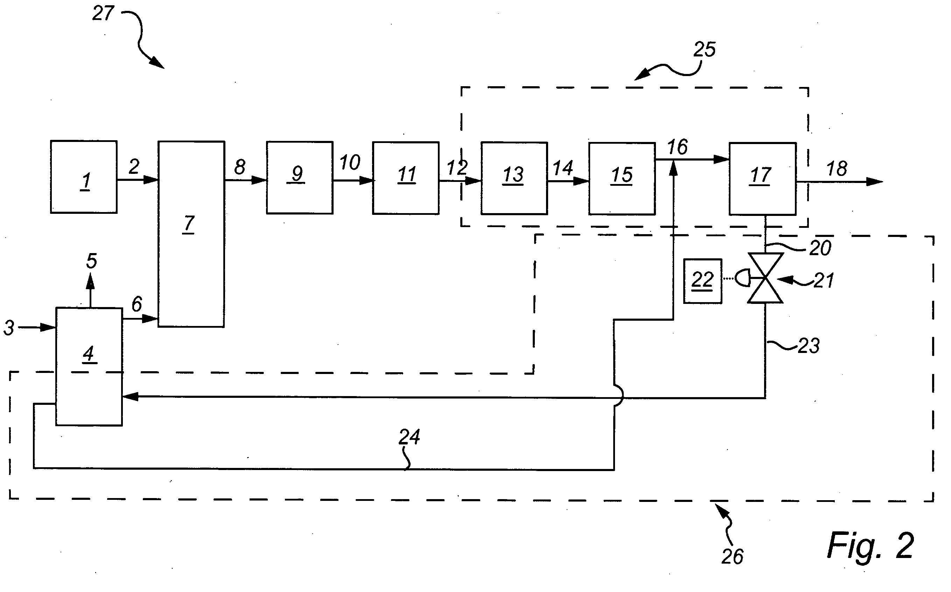

Fig. 2 is a schematic representation of a boiler system 27, as seen from the side thereof. The boiler system 27 comprises the same features as in previously mentioned Fig 1 apart from the construction at the beginning of the recirculation system 26.

The CO₂ compression unit 17 comprises at least one compressor having at least one, and typically two to ten compression stages for compressing the carbon dioxide gas from a preceding CO₂ separation unit 15. Further, the CO₂ compression unit 15 may also comprise intercoolers and aftercoolers (not shown). Also, separators (not shown) may be included to separate liquid phase from gaseous phase. The carbon dioxide rich stream 20 to be recirculated may be taken from streams within the CO₂ compression unit 17. The carbon dioxide stream 20 to be used for recirculation may be forwarded from the CO₂ compression unit 17 after the compressor(s) i.e. all compression stages, included in the CO₂ compression unit 17 and after an at least one cooling unit (not shown) before forwarding the carbon dioxide out of the CO₂ compression unit 17, or after the compressor(s) included in the CO₂ compression unit 17 and before an at least one carbon dioxide pump (not shown).

The herein disclosed incorporation of a recirculation system 26 on the recirculation of the CO₂ compression unit 17 results in a decreased overall energy consumption. The use of the surplus of cold energy for the separation of air in the air separation unit 4 may also influence the design of the air separation unit 4, since it may be modified. Thus, by using heat energy from another part of the oxy-fuel process the overall energy consumption is decreased. Also by adapting the boiler system process to different load cycles the process may be optimized in view of energy consumption.

It will be appreciated that numerous variants of the embodiments described above are possible within the scope of the appended claims.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A method of operating a boiler system (27) comprising an oxy-fuel boiler (7) in which an oxygen stream (6) and a fuel stream (2) are combusted to generate a flue gas stream (8), an air separation unit (4) producing the oxygen stream (6) for the oxy-fuel boiler (7), and a gas processing unit (25) for cleaning and compressing at least a portion of the flue gas stream (6) generated in the oxy-fuel boiler (7) producing a pressurized carbon dioxide stream (18), the method comprising:
operating the boiler system (27), at least for a period of time, in a recirculation mode, during which a carbon dioxide stream (20) from a CO₂ compression unit (17) within the gas processing unit (25) is evaporated in the air separation unit (4) and forwarded as a stream (24) to the gas processing unit (25),
wherein the stream (24) is forwarded to the inlet of the CO₂ compression unit (17) or to a stream (16) containing carbon dioxide entering the CO₂ compression unit (17),
**characterized by**
establishing whether the boiler system (27) operates at a first load or at a second load, wherein the second load is a lower load than the first load, controlling the boiler system (27) to operate in the recirculation mode when the boiler system operates at the second load, and controlling the boiler system (27) to stop operation in the recirculation mode when the boiler system (27) operates at the first load.

2. The method according to claim 1, in the recirculation mode, the carbon dioxide stream (20) is made to expand before entry into the air separation unit (4) as a stream (23).

3. The method according to any one of claims 1-2, wherein the recirculation mode of the boiler system (27) is controlled using a controlling device (22) and a regulating device (21).

4. The method according to claim 3, wherein the regulating device (21) is also responsible for expanding the carbon dioxide stream (20) before entry into the air separation unit (4) as the stream (23).

5. The method according to any one of claims 1-4, wherein the carbon dioxide stream (20) from the CO₂ compression unit (17) is a part of the pressurized carbon dioxide stream (18) exiting the gas processing unit (25) or is taken from the CO₂ compression unit (17) before the pressurized carbon dioxide stream (18) is exiting the gas processing unit (25).

## Patentansprüche

1. Verfahren zum Betreiben eines Kesselsystems (27), welches einen Sauerstoff-Brennstoff-Kessel (7), in welchem ein Sauerstoffstrom (6) und ein Brennstoffstrom (2) verbrannt werden, um einen Rauchgasstrom (8) zu erzeugen, eine Luftzerlegungseinheit (4), welche den Sauerstoffstrom (6) für den Sauerstoff-Brennstoff-Kessel (7) erzeugt, und eine Gasverarbeitungseinheit (25) zum Reinigen und Komprimieren mindestens eines Teils des Rauchgasstromes (6), der in dem Sauerstoff-Brennstoff-Kessel (7) erzeugt wird, wodurch ein druckbeaufschlagter Kohlendioxidstrom (18) erzeugt wird, aufweist, wobei das Verfahren Folgendes aufweist:
Betreiben des Kesselsystems (27), mindestens für einen Zeitraum, in einem Umluftmodus, während welchem ein Kohlendioxidstrom (20) von einer CO2-Kompressionseinheit (17) innerhalb der Gasverarbeitungseinheit (25) in der Luftzerlegungseinheit (4) verdampft und als ein Strom (24) an die Gasverarbeitungseinheit (25) weitergeleitet wird,
wobei der Strom (24) an den Einlass der CO2-Kompressionseinheit (17) oder an einen Strom (16), der Kohlendioxid enthält, der in die CO2-Kompressionseinheit (17) eintritt, weitergeleitet wird,
**gekennzeichnet durch**
das Feststellen, ob das Kesselsystem (27) mit einer ersten Last oder mit einer zweiten Last arbeitet, wobei die zweite Last eine geringere Last als die erste Last ist, das Steuern des Kesselsystems (27) zum Betrieb im Umluftmodus, wenn das Kesselsystem mit der zweiten Last arbeitet, und das Steuern des Kesselsystems (27) zum Stoppen des Betriebes im Umluftmodus, wenn das Kesselsystem (27) mit der ersten Last arbeitet.

2. Verfahren nach Anspruch 1, wobei, im Umluftmodus, der Kohlendioxidstrom (20) vor dem Eintritt in die Luftzerlegungseinheit (4) als ein Strom (23) expandiert wird.

3. Verfahren nach einem der Ansprüche 1-2, wobei der Umluftmodus des Kesselsystems (27) unter Verwendung eines Steuergerätes (22) und eines Regelgerätes (21) gesteuert wird.

4. Verfahren nach Anspruch 3, wobei das Regelgerät (21) auch für das Expandieren des Kohlendioxidstromes (20) vor dem Eintritt in die Luftzerlegungseinheit (4) als der Strom (23) verantwortlich ist.

5. Verfahren nach einem der Ansprüche 1-4, wobei der Kohlendioxidstrom (20) aus der CO₂-Kompressionseinheit (17) ein Teil des druckbeaufschlagten Kohlendioxidstromes (18), der aus der Gasverarbeitungseinheit (25) austritt, ist oder aus der CO₂-Kompressionseinheit (17) entnommen wird, bevor der druckbeaufschlagte Kohlendioxidstrom (18) aus der Gasverarbeitungseinheit (25) austritt.

## Revendications

1. Procédé de fonctionnement d'un système de chaudière (27) comprenant une chaudière à oxycombustible (7) dans laquelle un courant d'oxygène (6) et un courant de combustible (2) sont brûlés pour générer un courant de gaz de combustion (8), une unité de séparation d'air (4) produisant le courant d'oxygène (6) pour la chaudière à oxycombustible (7), et une unité de traitement de gaz (25) pour nettoyer et comprimer au moins une partie du courant de gaz de combustion (6) généré dans la chaudière à oxycombustible (7) produisant un courant de dioxyde de carbone pressurisé (18), le procédé comprenant :
le fonctionnement du système de chaudière (27), au moins pendant un laps de temps, dans un mode de recirculation, pendant lequel un courant de dioxyde de carbone (20) provenant d'une unité de compression de CO₂ (17) à l'intérieur de l'unité de traitement de gaz (25) est évaporé dans l'unité de séparation d'air (4) et acheminé sous la forme d'un courant (24) jusqu'à l'unité de traitement de gaz (25), le courant (24) étant acheminé jusqu'à l'entrée de l'unité de compression de CO₂ (17) ou jusqu'à un courant (16) contenant du dioxyde de carbone entrant dans l'unité de compression de CO₂ (17),
**caractérisé par**
l'établissement que le système de chaudière (27) fonctionne à une première charge ou à une deuxième charge, la deuxième charge étant une charge inférieure à la première charge, le contrôle du système de chaudière (27) pour qu'il fonctionne dans le mode de recirculation quand le système de chaudière fonctionne à la deuxième charge, et le contrôle du système de chaudière (27) pour qu'il arrête le fonctionnement dans le mode de recirculation quand le système de chaudière (27) fonctionne à la première charge.

2. Procédé selon la revendication 1 dans lequel, dans le mode de recirculation, le courant de dioxyde de carbone (20) est dilaté avant d'entrer dans l'unité de séparation d'air (4) sous la forme d'un courant (23).

3. Procédé selon l'une quelconque des revendications 1 et 2, dans lequel le mode de recirculation du système de chaudière (27) est contrôlé en utilisant un dispositif de contrôle (22) et un dispositif de régulation (21).

4. Procédé selon la revendication 3, dans lequel le dispositif de régulation (21) est aussi responsable de la dilatation du courant de dioxyde de carbone (20) avant l'entrée dans l'unité de séparation d'air (4) sous la forme du courant (23).

5. Procédé selon l'une quelconque des revendications 1 à 4, dans lequel le courant de dioxyde de carbone (20) provenant de l'unité de compression de CO₂ (17) constitue une partie du courant de dioxyde de carbone pressurisé (18) sortant de l'unité de traitement de gaz (25) ou est prélevé dans l'unité de compression de CO₂ (17) avant que le courant de dioxyde de carbone pressurisé (18) sorte de l'unité de traitement de gaz (25).
